# EUROPEAN PATENT APPLICATION

(11) **EP 3 854 523 A1**
(43) Date of publication of application: **28.07.2021**
(21) Application number: 20153388.2
(22) Date of filing: 23.01.2020
(51) Int. Cl.: B24B 23/02, B24B 45/00

(54) **FUNCTIONAL UNIT FOR A HAND-GUIDED POWER TOOL AND POWER TOOL WITH SUCH A FUNCTIONAL UNIT**

(71) Applicant: Valentini, Guido, 20122 Milano (IT)
(72) Inventor: Valentini, Guido, 20122 Milano (IT)
(74) Representative: Wörz, Volker Alfred

(57) **Abstract**

The invention refers to a functional unit (27) for a hand-guided power tool (1), in particular in the form of a polisher or a sander. The functional unit (27) comprises a base element (28), a first attachment member (29) for releasable attachment of the base element (28) to a motor driven tool shaft (23) of the power tool (1), a working element (11) adapted for working a surface of a workpiece during use of the power tool (1), and a second attachment member (30) for attachment of the working element (11) to the base element (28). In order to provide for a fast and easy replacement of a functional unit (27) against another functional unit (27) it is suggested that the first attachment member (29) is adapted to releasably attach the base element (28) of the functional unit (27) to the tool shaft (23) of the power tool (1) by means of magnetic force.

## Description

The present invention refers to a functional unit for a hand-guided power tool, in particular in the form of a polisher or a sander. The functional unit comprises a base element, a first attachment member for releasable attachment of the base element to a motor driven tool shaft of the power tool, a working element adapted for working a surface of a workpiece during use of the power tool, and a second attachment member for attachment of the working element to the base element.

The invention further refers to a hand-guided power tool with such a functional unit releasably attached to a tool shaft of the power tool.

Such a functional unit and a corresponding power tool are known in the prior art. For example, EP 3 012 068 A1 describes a power tool with an interchangeable functional unit, which may be releasably attached to a tool shaft of the power tool. A set of different functional units comprising eccentric elements with different excentres and/or an extension piece without any excentre may be provided and attached to the tool shaft according to the user's desires and needs. For example, a functional unit with an extension piece may be attached to the power tool if the functional unit has a working element in the form of a rotary brush, a functional unit with an eccentric element with an excentre of 2 or 3 mm may be attached to the power tool if the functional unit has a working element in the form of a backing pad with a sanding member, e.g. a sanding sheet, and a functional unit with an eccentric element with an excentre of 12 mm may be attached to the power tool if the functional unit has a working element in the form of a backing pad with a polishing member, e.g. a polishing pad.

The known functional unit is preferably attached to the tool shaft by means of a threaded connection. This has the disadvantage that loosing and detaching the functional unit from the tool shaft and attaching another functional unit thereto is rather complicated and time consuming. In particular, separate tools are necessary for loosing and detaching the functional unit from the tool shaft and attaching another functional unit thereto. In order to loosen or tighten the threaded connection the tool shaft has to be temporarily fixed (e.g. by means of a wrench or a blocking mechanism in the power tool) so that the tool shaft is prevented from rotating about its rotational axis.

The object of the present invention is to provide for a functional unit which can be detached from and attached to the tool shaft of the power tool in an easier and faster manner, in particular without any separate tools.

In order to solve this object, a functional unit with the features of claim 1 is suggested. In particular, starting from the functional unit of the above identified kind, it is suggested that the first attachment member is adapted to releasably attach the base element of the functional unit to the tool shaft of the power tool by means of magnetic force.

The functional unit can be detached from the tool shaft simply and fast by overcoming the magnetic force, which holds the functional unit attached to the tool shaft. Further, a functional unit can be attached to the tool shaft simply and fast by bringing the functional unit near the tool shaft into a region where the magnetic force acts. The functional unit is automatically attached to the tool shaft by the magnetic force. The magnetic force acts at least in an axial direction, i.e. parallel to a rotational axis of the tool shaft.

The first attachment member and the second attachment member are preferably arranged on opposite sides of the base element. Hence, the base element acts as some kind of a coupling element for coupling the working element to the tool shaft of the power tool. Depending on the type and design of the base element of different functional units, the purely rotational movement of the tool shaft about its rotational axis may be translated into different types of working movements of the working element including but not limited to a purely rotational, a random-orbital, a gear-driven (roto-orbital) and an eccentric working movement. The different types of working movements could also differentiate from each other simply by the value of the orbit or the excentre of an orbital or eccentric working movement. Furthermore, the different functional units could also differentiate from each other simply by having different working elements. Hence, the present invention provides for a hand-guided power tool with the possibility of using different working elements and/or realizing different types of working movements of the working elements simply by exchanging one functional unit attached to the power tool against another functional unit having another working element and/or realizing another type of working movement.

According to a preferred embodiment of the present invention it is suggested that the first attachment member is adapted to attach the base element of the functional unit to the tool shaft of the power tool in a torque proof manner. In case a torque is to be transmitted from the tool shaft to the functional unit, an interlocking mechanism can be provided between the functional unit and the tool shaft, which provides for a defined guiding of the functional unit in respect to the tool shaft in a plane extending essentially perpendicular to the rotational axis and which prevents a rotation of the functional unit in respect to the tool shaft about the rotational axis, once the interlocking mechanism is active. Preferably, the interlocking mechanism can be disconnected only in an axial direction, i.e. in a direction parallel to the rotational axis.

It is possible that the torque proof attachment of the functional unit to the tool shaft could be provided if the first attachment member comprises a protrusion having a not rotation-symmetric outer circumferential surface, the protrusion adapted to being received in a corresponding recess of the receiving element fixedly attached or making an integral part of the tool shaft of the power tool, the recess having a corresponding not rotation-symmetric inner circumferential surface, so that the recess of the tool shaft can receive the protrusion of the first attachment member in a form fit manner in only one or more discrete rotational positions, and wherein the protrusion is held in the recess in an axial direction by means of magnetic force.

Alternatively, it is suggested that the first attachment member comprises a receiving element having a recess with a not rotation-symmetric inner circumferential surface, the recess adapted to receive a corresponding protrusion fixedly attached or making an integral part of the tool shaft of the power tool, the protrusion having a corresponding not rotation-symmetric outer circumferential surface, so that the recess of the first attachment member can receive the protrusion of the tool shaft in a form fit manner in only one or more discrete rotational positions, and wherein the protrusion is held in the recess in an axial direction by means of magnetic force.

It is possible that one or more permanent magnets are provided in the protrusion and that the receiving element of the first attachment member comprises a ferromagnetic material, in particular in the bottom surface of the recess. In this way, a magnetic force is provided which acts between the first attachment member and the tool shaft and which holds the functional unit in respect to the tool shaft.

Alternatively, it is suggested that one or more permanent magnets are provided in the receiving element of the first attachment member, in particular below a bottom surface of the recess and that the protrusion is made of a ferromagnetic material. Again, a magnetic force is provided which acts between the first attachment member and the tool shaft and which holds the functional unit in respect to the tool shaft.

In a further embodiment it is suggested that the base element comprises two pieces fixedly attached to each other in a torque proof manner, a first piece, preferably made of a plastic material, comprising the first attachment member and a second piece, preferably made of metal, comprising the second attachment member. Preferably, the two pieces are separate from each other. It is suggested that the first piece of the base element is designed to receive at least part of the second piece of the base element in a form fit manner. Further, the two pieces are preferably designed to be attached to each other by means of one or more snap on connections, when the at least part of the second piece is received by the first piece. Of course, there are many other possibilities available for fixing the first piece of the base element to the second piece, including gluing, welding, screwing, riveting or the like.

Preferably, the first piece of the base element comprises a receiving element having a recess and the second piece of the base element comprises a receptacle for the one or more permanent magnets facing the receiving element of the first piece when the two pieces are fixedly attached to each other. It is suggested that the receptacle is located opposite to the second attachment member.

The base element of the functional unit may comprise a simple extension piece, which transmits the rotational movement of the tool shaft directly to the working element. The extension piece may have a cylindrical form with the first attachment member on one end and the second attachment member on the opposite second end. The extension piece is particularly useful for operating working elements which perform a purely rotational working movement. Such working elements may be, for example, a sanding plate, a polishing plate or a rotary brush.

According to a preferred embodiment of the present invention, it is suggested that the base element of the functional unit comprises an eccentric element. Preferably, in the case of a two-piece design of the base element, the second piece of the base element comprises the eccentric element. The first attachment member and the second attachment member are located on opposite sides of the eccentric element. A rotational axis of the tool shaft of the power tool, which is releasably attached to the eccentric element by means of the first attachment member, and an axis of the working element, which is attached to the eccentric element by means of the second attachment member, run essentially parallel and at a distance to each other. The tool shaft is attached to the eccentric element in a torque proof manner, thereby providing for an oribtal movement of the axis of the working element and the working element itself, respectively, about the rotational axis of the tool shaft.

It is further suggested that the second attachment member comprises an attachment rod rotatably supported in the base element and that the working element is attached, preferably releasably attached, to the attachment rod in a torque proof manner. According to this embodiment, the working element is freely rotatable about its axis in respect to the base element. If the base element comprises an eccentric element, in this embodiment the working element executes a random-orbital working movement during the intended use of the power tool. Such a working movement can be used for sanding or polishing operations. To this end, a functional unit with an eccentric element with a small excentre of e.g. 2 or 3 mm and with a working element in the form of a backing pad with a sanding sheet may be attached to the power tool for sanding operations. Similarly, a functional unit with an eccentric element with a larger excentre of e.g. 12 mm and with a working element in the form of a backing pad with a polishing member, e.g. a polishing pad, may be attached to the power tool for polishing operations. Of course, the values of the excentres may differ from the mentioned values.

Depending on the design of the base element it may be necessary to provide different types of protective shrouds at the front end of the power tool, covering at least part of the functional unit. The protective shroud may also have a braking functionality slowing down or even entirely preventing the working element from freely rotating about its axis in respect to the base element. The braking functionality may be provided mechanically (by means of friction between a static bottom surface of the protective shroud on a top surface of the rotatable working element) or magnetically (by means of magnetic force acting between the static protective shroud and the rotatable working element). The larger the orbit or excentre of the base element is, the larger the diameter of the protective shroud must be, in order to allow a free unobstructed rotation of the functional unit about the rotational axis of the tool shaft.

The attachment of the working element to the second attachment member of the functional unit may be effected in many different ways. The working element may be fixedly or releasably attached to the second attachment member of the functional unit. For example, the attachment rod could form an integral part of a top surface of the working element and could be inserted into and secured to a bearing of the base element in an axial direction, e.g. by means of one or more retaining rings. Furthermore, the attachment rod could be held and secured in a bearing of the base element and the working element could be releasably attached to the attachment rod. Releasable attachment could be effected, for example, by means of a threaded connection, a snap-in connection or a magnetic connection.

The working element could be attached to the second attachment member of the functional unit by means of a threaded rod. In that case the second attachment member could be in the form of a threaded bore. According to a preferred embodiment of the invention, the attachment rod comprises a protrusion fixedly attached to or making an integral part of the attachment rod, the protrusion having a not rotation-symmetric outer circumferential surface and adapted to be received by a corresponding recess of a receiving element formed in or on a top surface of the working element, the recess having a corresponding not rotation-symmetric inner circumferential surface, so that the protrusion of the attachment rod can be inserted into the recess of the working element in a form fit manner in only one or more discrete rotational positions. In this manner, the attachment rod and the working element are attached to each other in a torque proof manner. A torque can be transmitted from the attachment rod to the working element in a plane extending perpendicular to the axis of the working element. However, due to the fact that the attachment rod is supported in the base element in a freely rotatable manner, the working element is also freely rotatable about its axis in respect to the base element.

In an axial direction, the working element can be secured to the attachment rod, e.g. by means of a screw. The screw can be threaded through a hole in a bottom surface of the working element and screwed into the attachment rod located on the top surface of the working element. When the screw is tightened to the attachment rod, the screw head is preferably countersunk in an appropriate depression on the bottom surface of the working element.

Alternatively, it is preferred that the protrusion of the attachment rod is held in the recess of the receiving element of the working element in an axial direction by means of magnetic force. This allows an easy and fast attachment and detachment of the working element from the base element. Different values of the magnetic forces for attachment of the functional unit to the tool shaft and for attachment of the working element to the attachment rod can be provided. In this manner, when pulling at the working element in an axial direction the user can be sure that only the working element is separated from the attachment rod or the entire functional unit including the working element is separated from the tool shaft.

According to a preferred embodiment of the present invention, it is suggested that the not rotation-symmetric outer circumferential surface of the protrusion of the attachment rod and the not rotation-symmetric inner circumferential surface of the recess of the receiving element of the base element correspond to each other so that the protrusion could be theoretically inserted into the recess in one or more discrete rotational positions in a form fit manner. In this embodiment, the working element could be directly attached to the tool shaft without the base element with its first and second attachment members in between. The recess of the receiving element in the top surface of the working element has the same design and dimensions as the recess of the receiving element of the first attachment member of the functional unit. Similarly, the protrusion of the tool shaft has the same design and dimensions as the protrusion of the attachment rod of the functional unit. Due to the possibility of omitting the base element of the functional unit when desired, the overall height of the power tool, in particular at the front end of the tool comprising the working element, can be significantly reduced. This allows the user of the power tool to enter into far smaller, in particular lower, and more cramped spaces with the front end of the power tool for performing a working operation there. In this case, the working element would perform the same rotational movement as the tool shaft.

It is further suggested that the working element of the functional unit comprises one of a plurality of backing pads with different diameters to which a polishing or sanding member is releasably attachable. Preferably, the polishing or sanding member is attached to a bottom surface of the backing pad by means of an adhesive layer or a layer of a hook-and-loop-fastener (Velcro®). The sanding member preferably comprises sanding paper or a sanding fabric provided with abrasive particles on its bottom surface. The form and size of the sanding member preferably corresponds to the form and size of the bottom surface of the respective backing pad. The polishing member preferably comprises polishing pads made of foam with different rigidities and pore sizes, or comprising wool of different hardness, microfibers of different fibre diameters. Microfibres are usually made of polyester, polyamide, acrylic, modal, lyocell or viscose in the range of 0.5-1.2 dtex. The form and size of the top surface of the polishing member preferably corresponds to the form and size of the bottom surface of the respective backing pad. The backing pads could have diameters of, for example, 30 mm, 50 mm or 75 mm. Of course, the working element of the functional unit could also comprise an integrated sanding or polishing pad where the sanding or polishing member is fixedly attached to the backing pad and forms an integral part of the backing pad. Further, the working element could comprise, for example, rotary brushes with bristles made of natural or synthetic materials of different hardness.

The present invention also suggests a hand-guided power tool, in particular in the form of a polisher or a sander, comprising a housing and a motor located therein, the motor driving a tool shaft of the power tool, to which a functional unit of the above mentioned kind can be releasably attached by means of magnetic force. This allows for a safe, easy and fast attachment of a functional unit to the tool shaft of the power tool and detachment of the functional unit, in particular without having to use separate tools for loosing and detaching the functional unit from the tool shaft and for attaching another functional unit thereto.

A protrusion with a not rotation-symmetric outer circumferential surface could be designed separate from the tool shaft and fixedly attached thereto. According to a preferred embodiment, a protrusion with a not rotation-symmetric outer circumferential surface forms an integral part of the tool shaft. Hence, the protrusion and the tool shaft are embodied as a single part. The protrusion is adapted to be received in a corresponding recess of the receiving element of the first attachment member of the functional unit. The recess has a corresponding not rotation-symmetric inner circumferential surface, so that the recess of the first attachment member can receive the protrusion of the tool shaft in a form fit manner in only one or more discrete rotational positions. The protrusion is held in the recess in an axial direction by means of magnetic force. Designing the protrusion as an integral part of the tool shaft makes production, manufacture and assembly of the functional unit and the power tool, respectively, particularly fast, easy and cheap. Furthermore, the overall height of the power tool can be reduced.

Further features and advantages of the present invention will be described in detail hereinafter with reference to the accompanying drawings. It is emphasized that the shown embodiments are purely exemplary and are not intended to limit the invention in any way. In particular, the present invention also comprises embodiments with only one or any possible combination of the features shown in the drawings and/or described hereinafter, even if such embodiments are not explicitly shown in the drawings and/or mentioned in the description. The drawings show:
- Fig. 1: an example of a hand-guided power tool according to the present invention in a side view;
- Fig. 2: the power tool of Fig. 1 in a longitudinal sectional view;
- Fig. 3: an example of a front part of the power tool of Figs. 1 and 2 with a functional unit attached thereto;
- Fig. 4: the front part of the power tool of Fig. 3 without a housing of the power tool;
- Fig. 5: an example of a tool shaft of the power tool of Fig. 3;
- Fig. 6: an example of a functional unit for a power tool of Fig. 3;
- Fig. 7: the functional unit of Fig. 6 without a first part of a base element;
- Fig. 8: an example of a second part of a base element of the functional unit of Fig. 6;
- Fig. 9: an example of a working element of the functional unit of Fig. 6;
- Fig. 10: the working element of Fig. 9 without a cover plate;
- Fig. 11: another example of a tool shaft of the power tool of Fig. 3 with part of a functional unit attached thereto;
- Fig. 12: another example of a tool shaft of the power tool of Fig. 3 without a functional unit and without a cover element of a protrusion provided at a distal end of the tool shaft of the power tool;
- Fig. 13: another example of a functional unit for a power tool of Fig. 3 in a perspective view from above;
- Fig. 14: the functional unit of Fig. 13 in a perspective view from below;
- Fig. 15: another example of a front part of the power tool of Figs. 1 and 2 with a functional unit attached thereto, in a partial sectional view, without a housing of the power tool;
- Fig. 16: yet another example of a front part of the power tool of Figs. 1 and 2 with a functional unit attached thereto; and
- Fig. 17: the front part of Fig. 16 without a housing of the power tool and without a protection hood.

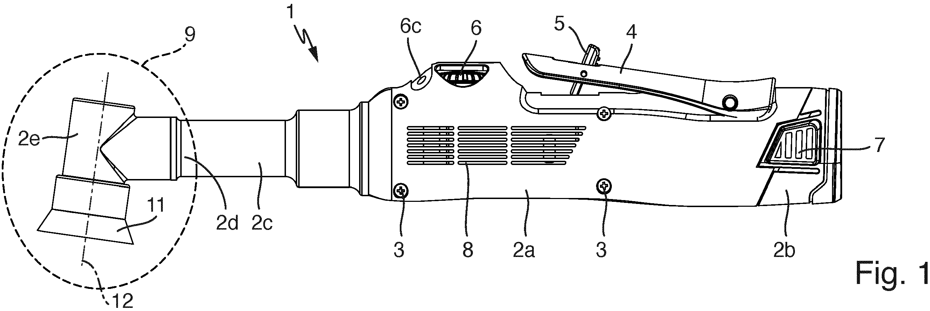

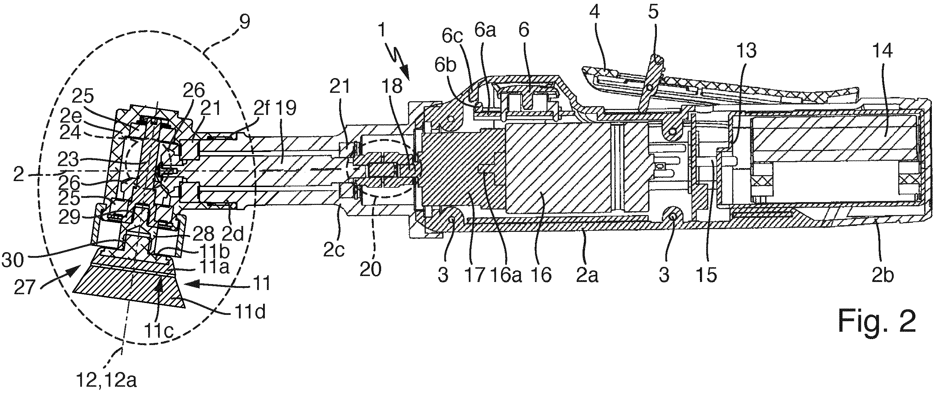

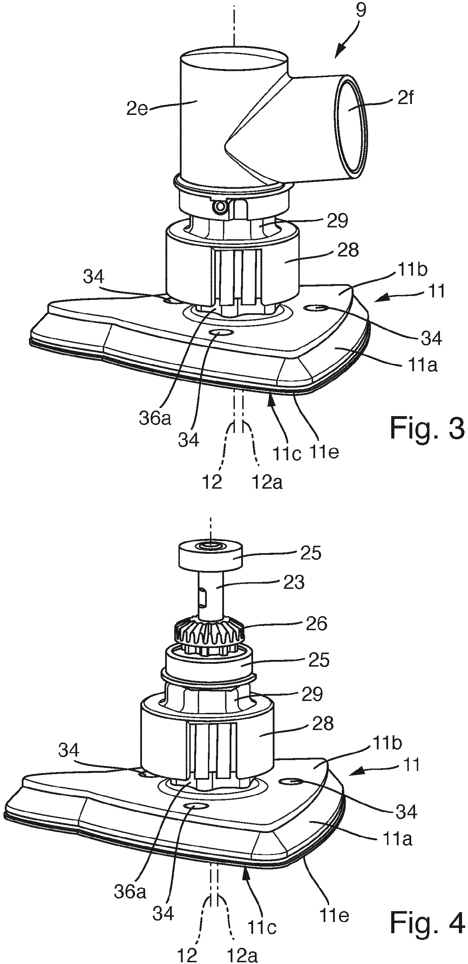

Figs. 1 and 2 show a side view of a hand held and/or hand guided power tool 1 according to the present invention. Depending on the type of functional unit 27 (see Figs. 3, 4, 6, 15) attached thereto, the power tool 1 may be embodied as a polishing machine or polisher, a sanding machine or sander or any other type of power tool 1 for working tight and cramped spaces on exterior and/or interior surfaces of a motor vehicle, a boat or ship or an airplane. In particular, the power tool 1 may be used for sanding small areas of a vehicle body, or for polishing or cleaning a motor vehicle behind door handles, around exterior mirrors, along window frames, around a sunroof, wheel rims, and at the vehicle front and rear, in particular in and around air ducts, a radiator grill and a front or rear spoiler, as well as seat cushions, door panels, dashboard, outlet nozzles of a heating and climate system. Until the power tool according to EP 3 012 068 A1 in the form of the RUPES Bigfoot Nano iBrid was available on the market, such areas of a motor vehicle, boat, ship or airplane had to be cleaned, sanded or polished by hand.

The power tool 1 includes a housing 2 which may be made up of essentially two main parts, a rear part 2a and a front part 2c. In more detail, the housing 2 comprises the rear part 2a including a distal rear end part 2b, and the front part 2c including a front casing 2e. The rear part 2a is preferably made of a rigid plastics material. Of course, the rear part 2a of the housing 2 could also be made of a different rigid material, for example metal or carbon fibre. Further, the rear part 2a of the housing 2 could comprise regions provided with resilient material like a soft plastic material or rubber in order to ensure safe and comfortable gripping, holding and guiding of the power tool 1 by a user. The rear part 2a of the housing is preferably hollow and is adapted to receive various components of the power tool 1 as will be described in further detail hereinafter with reference to Fig. 2. The rear part 2 may be divided into two half shells which are divided from each other along an essentially vertical plane. The two half shells are attached to each other, for example by means of screws 3. Alternatively, the two half shells could also be attached to each other by means of rivets, one or more snap couplings, glue or the like.

The front part 2c of the housing 2 can be fixed to the rear part 2a of the housing 2 by screws, a threaded connection or a similar attachment mechanism commonly known in the art. Of course, the front part 2c and the rear part 2a of the housing 2 could be embodied as a single common housing unit, too. Preferably, the front part 2c is made of metal, in particular aluminium, and has an essentially tubular form. The front part 2c receives a first tool shaft 19 in a manner so as to allow its rotation about a rotational axis 22. To this end, one or more bearings 21, e.g. in the form of a ball race, may be provided inside the front part 2c which rotatably support the first tool shaft 19. The front casing 2e may also be made of metal, in particular aluminium, and have an essentially tubular form. The front casing 2e receives a second tool shaft 23 in a manner so as to allow its rotation about a rotational axis 12. To this end, one or more bearings 25, e.g. in the form of a ball race, may be provided inside the front casing 2e, which rotatably support the second tool shaft 23.

A tool head 9 is fixed to a front distal end 2d of the front part 2c of the housing 2. The tool head 9 is preferably fixed to the distal end 2d by screws, a threaded connection 2f or a similar attachment mechanism. The tool head 9 comprises the front casing 2e and a working element 11 adapted for working a surface of a workpiece during intended use of the power tool 1.

The working element 11 may comprise a backing pad 11a to which a sanding or polishing member 11d is attached. The backing pad 11a may comprise a supporting structure 11b, for example made of metal or a rigid plastics material. The sanding or polishing member 11d is preferably attached to a bottom surface 11c of the backing pad 11a in a releasable manner, e.g. by means of a hook-and-loop fastener or an adhesive. The backing pads 11a may have a rather small diameter of, for example, 30 mm, 50 mm or 75 mm. The sanding member may comprise a sanding paper or a sanding fabric provided with abrasive particles on its bottom surface. The form and size of the sanding member preferably corresponds to the form and size of the bottom surface 11c of the backing pad 11a. The polishing member 11d may comprise a polishing pad made of foam with different rigidities and pore sizes, or with wool of different hardness or microfibers of different fibre diameters. The form and size of the top surface of the polishing member 11d preferably corresponds to the form and size of the bottom surface 11c of the backing pad 11a. Of course, the working element 11 could also comprise an integrated sanding or polishing pad where the sanding or polishing member is fixedly attached to the backing pad 11a and forms an integral part thereof. Further, the working element 1 could comprise, for example, rotary brushes with bristles made of natural or synthetic materials of different hardness.

The rear part 2a of the housing 2 includes an actuation lever 4 co-operating with a switch for turning on and off the power tool 1. The switch is preferably located inside the rear part 2a of the housing 2. The actuation lever 4 may be provided on the top side (see Figs. 1 and 2) or on the bottom side of the housing 2 (not shown). The actuation lever 4 may have a blocking mechanism 5 for avoiding unintentional activation of the tool 1. Preferably, when pressing the lever 4 and turning the tool 1 on, a spring force must be overcome. The spring force forces the lever 4 back into its original position if the user of the tool 1 lets go. Furthermore, the rear part 2a of the housing may provided with a turn wheel 6 for speed regulation of a tool's motor. The turn wheel 6 may be provided on the top side (see Figs. 1 and 2), on the bottom side (not shown) or an any lateral side of the housing 2 (not shown). The rear part 2a of the housing 2 may be provided with a plurality of slots 8 for enabling an air exchange between the inside and the environment outside of the housing 2 and for cooling the electronic components located inside the housing 2.

The distal rear end 2b of the rear part 2a of the housing 2 can be removed in order to withdraw at least one battery 14 (see Fig. 2) from the inside of the rear part 2a of the housing 2. One or more batteries 14 may be combined to form a battery pack 13. A receptacle for receiving the battery pack 13 is formed in the inside of the rear part 2a of the housing 2. The battery pack 13 may be attached to the distal rear end 2b of the housing 2, e.g. by means of a frictional connection, a snap-in connection, glue or screws, or form an integral part of the distal rear end 2b. The distal end 2b of the housing 2 serves as a cover of the receptacle for the battery pack 13 and may be secured to the rear part 2a by a snap-action connection comprising two opposite lateral knobs 7 for releasing the snap-action connection. For removing the distal rear end 2b from the rear part 2a of the housing 2, the lateral knobs 7 are pressed, thereby releasing the snap-action connection and allowing separation of the distal end 2b of the housing 2 from the rear part 2a and withdrawal of the battery pack 13 from the housing 2. The battery pack 13 provides the power tool 1 and its electronic components, respectively, with electric energy necessary for their operation. Upon insertion of the battery pack 13 into the rear part 2a of the housing 2 the one or more batteries 14 are automatically connected to electric connectors 15, fixedly located inside the housing 2. Electric energy stored in the battery 14 is provided to the other electrical components of the polisher 1 via the connectors 15. Of course, the power tool 1 could also be operated with electric energy from a mains power supply. In that case the battery pack 13 would not be necessary and the compartment for the battery pack 13 could be used for accommodating a transformer and other electric circuitry for transforming the mains voltage from 100V to 250V and from 50 Hz to 60 Hz, into an operating voltage (e.g. 12V, 18V, or 24V) for the electronic components of the power tool 1.

Furthermore, located inside the rear part 2a of the housing 2 is an electric motor 16, preferably a brushless (BL) motor, in particular a BL direct current (BLDC) motor, with a motor shaft 16a. In the shown embodiment of Fig. 2 the motor shaft 16a actuates a first gear mechanism 17 which can define a certain ratio between the rotational speed of the motor shaft 16a and the rotational speed of the tool shaft 19 and/or 23, which eventually drives a working element 11. Depending on the design of the gear mechanism 17, the ration can be 1, larger than 1 or smaller than 1. Usually, the ratio will be larger than 1 causing the tool shaft 23 to rotate slower than the motor shaft 16a, thereby increasing the torque applied to the tool shaft 23. Preferably, the first gear mechanism 17 is an epicyclical gear. The gearbox output shaft is designated with reference sign 18. The output shaft 18 is connected to a first tool shaft 19 by a coupling assembly 20.

The power tool 1 can include a second gear mechanism 24 in order to translate the rotational movement of the motor shaft 16a and of the first tool shaft 19, respectively, about a first rotational axis 22 into a rotational movement of a second tool shaft 23 about a second rotational axis 12, whereas the two axes 12, 22 intersect at a certain angle larger than 0° and smaller than 180°, in particular around 90°. Preferably, the angle of the two rotational axes 12, 22 is approximately 97°-98°. The second tool shaft 23 eventually drives the working element 11. It is suggested that the second gear mechanism 24 includes a bevel gear with two bevel gear wheels 26. The gear ratio of the second gear mechanism 24 can be 1, larger than 1 or smaller than 1. The second gear mechanism 24 is preferably located in a tool head 9 of the power tool 1, in particular in the front casing 2e of the housing 2.

In contrast to the embodiment of Fig. 2 the separate first and second gear mechanisms 17, 24 could also be designed as a single gear mechanism, e.g. located in the tool head 9 of the power tool 1, in particular in the front casing 2e of the housing 2. In that case the motor shaft 16a would be directly coupled to the first tool shaft 19 by means of the coupling assembly 20. Alternatively, the first tool shaft 19 could form an integral part of the motor shaft 16a. The desired gear ratio between the motor shaft 16a and the tool shaft 23 could be realized by the second gear mechanism 24. Hence, the second gear mechanism 24 would not only provide for a translation of the rotation of the first tool shaft 19 to a rotation of the second tool shaft 23 by approximately 90°, but would also provide for a certain ratio between the rotational speed of the first tool shaft 19 (corresponding to the rotational speed of the motor shaft 16a) and the second tool shaft 23. Preferably, the second gear mechanism 24 would provide for a gear ration larger than 1, thereby reducing the rotational speed and increasing the torque of the second tool shaft 23 in respect to the motor shaft 16a or the first tool shaft 19, respectively. In this case, the function of the two separate gear mechanisms 17, 24 of Fig. 2 would be integrated in a single gear mechanism, like for instance bevel gear 24. Alternatively, the power tool 1 according to the present invention may also include only one of the two gear mechanisms 17, 24 or no gear mechanism at all.

Furthermore, at least one printed circuit board (PCB) comprising electric and electronic components which together form at least part of a control unit 6a is located inside the housing 2, in particular inside the rear part 2a of the housing 2. Preferably, the control unit 6a includes a microcontroller and/or a microprocessor for processing a computer program which is programmed to perform the desired motor control function, when it is executed on the microprocessor. The power tool 1 may comprise one or more LEDs 6b, which indicate the load status of the batteries 14. In this embodiment the one or more LEDs 6b are attached to the PCB of the control unit 6a. Light emitted by the LEDs 6b may pass through a transparent window 6c provided in the rear part 2a of the housing 2. For example, the one or more LEDs 6b may emit green light, when the load status is between 100% and 75%, yellow light, when the load status is between below 75% and 50%, red light, when the load status is below 50%, and flashing red light, when the load status is below 25%.

The power tool 1 comprises a functional unit 27, which is releasably attached to the second tool shaft 23. The functional unit 27 comprises a base element 28, a first attachment member 29 for releasable attachment of the base element 28 to the motor driven tool shaft 23 of the power tool 1, the working element 11, and a second attachment member 30 for attachment of the working element 11 to the base element. According to the invention the first attachment member 29 is adapted to releasably attach the base element 28 of the functional unit 27 to the tool shaft 23 of the power tool 1 by means of magnetic force. In Figs. 1 and 2 the functional unit 27 and in particular the first attachment member 29 is shown only schematically. The functional unit 27 is described in more detail hereinafter with reference to Figs. 3 to 15.

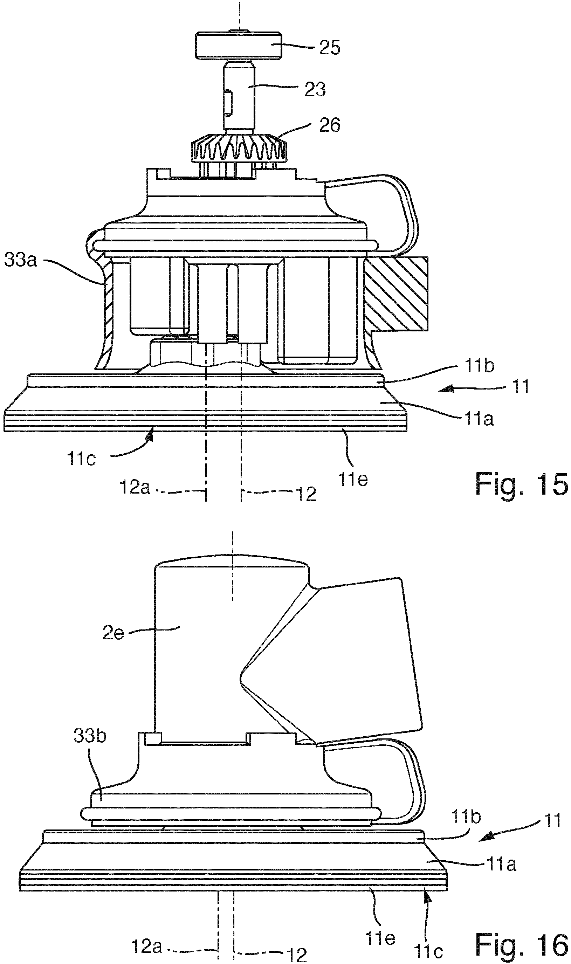

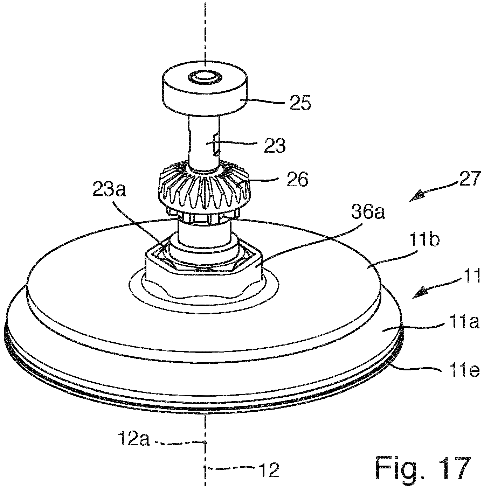

In a first embodiment shown in Figs. 3 to 10, the working element 11 comprises a triangular or delta-shaped backing pad 11a, having a layer of a hook-and-loop fastener on its bottom surface 11c, to which a sanding member 11e in the form of a sanding paper of fabric is releasably attached. Preferably, the backing pad 11a performs an orbital working movement. Of course, the functional unit 27 according to the present invention could also comprise other types of working elements 11 and/or working elements 11 performing other types of working movements. For example, the embodiment of Fig. 15 comprises a functional unit 27 having a working element 11 in the form of a circular backing pad 11a performing a random-orbital working movement. The embodiment of Figs. 16 and 17 comprises a functional unit 27 having a working element 11 in the form of a circular backing pad 11a performing a purely rotational working movement about the rotational axis 12 of the tool shaft 23.

The functional unit 27 can be detached from the tool shaft 23 simply and fast by overcoming the magnetic force, which holds the functional unit 27 attached to the tool shaft 23. Further, a functional unit 27 can be attached to the tool shaft 23 simply and fast by bringing the functional unit 27 near the tool shaft 23 into a region where the magnetic force acts. The functional unit 27 is automatically attached to the tool shaft 23 by the magnetic force. The magnetic force acts at least in an axial direction, i.e. parallel to the rotational axis 12 of the tool shaft 23.

The first attachment member 29 and the second attachment member 30 are preferably arranged on opposite sides of the base element 28. Hence, the base element 28 acts as some kind of a coupling element for coupling the working element 11 to the tool shaft 23 of the power tool 1. Depending on the type and design of the base element 28 of different functional units 27, the purely rotational movement of the tool shaft 23 about its rotational axis 12 may be translated into different types of working movements of the working element 11 including but not limited to a purely rotational, a random-orbital, a gear-driven (roto-orbital) and an orbital or eccentric working movement. The different types of working movements could also differentiate from each other simply by the value of the orbit or the excentre of an orbital or eccentric working movement. Furthermore, the different functional units 27 could also differentiate from each other simply by having different working elements 11. Hence, the present invention provides for a hand-guided power tool 1 with the possibility of using different working elements 11 and/or realizing different types of working movements of the working elements 11 simply by exchanging one functional unit 27 attached to the power tool 1 against another functional unit 27 having another working element 11 and/or realizing another type of working movement.

It is suggested that the first attachment member 29 is adapted to attach the base element 28 of the functional unit 27 to the tool shaft 23 of the power tool 1 in a torque proof manner. An interlocking mechanism can be provided between the functional unit 27 and the tool shaft 23, which provides for a defined guiding of the functional unit 27 in respect to the tool shaft 23 in a plane extending essentially perpendicular to the rotational axis 12 and which prevents a rotation of the functional unit 27 in respect to the tool shaft 23 about the rotational axis 12, once the interlocking mechanism is active. Preferably, the interlocking mechanism can be disconnected only in an axial direction, i.e. in a direction parallel to the rotational axis 12.

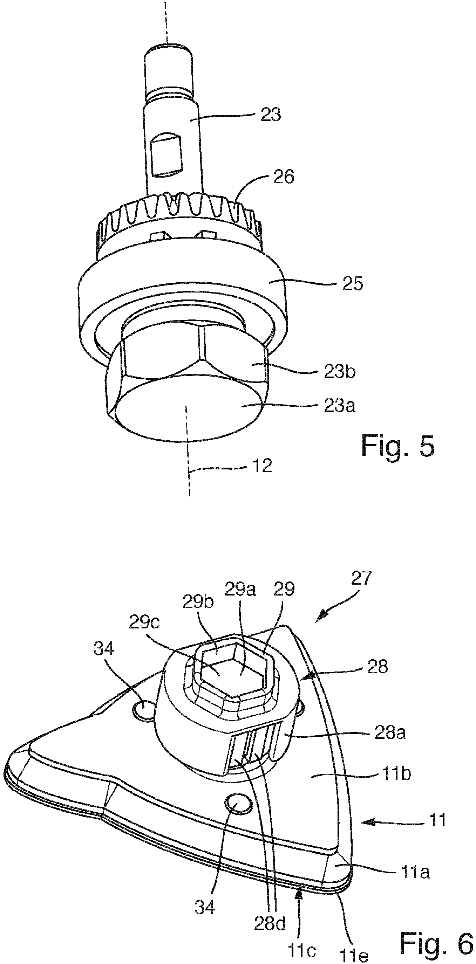

The interlocking mechanism may comprise the first attachment member 29 in the form of a receiving element 29a having a recess with a not rotation-symmetric inner circumferential surface 29b (see Fig. 6). The recess of the receiving element 29a is adapted to receive a corresponding protrusion 23a fixedly attached or making an integral part of the tool shaft 23 of the power tool 1 (see Fig. 5). The protrusion 23a has a corresponding not rotation-symmetric outer circumferential surface 23b, so that the recess of the receiving element 29a of the first attachment member 29 can receive the protrusion 23a of the tool shaft 23 in a form fit manner in only one or more discrete rotational positions. The protrusion 23a is held in the recess of the receiving element 29a in an axial direction by means of magnetic force.

In the embodiment of Figs. 5 and 6, the protrusion 23a and the recess of the receiving element 29a have a regular hexagonal form with lateral side surfaces 23b and 29b of the same length and the same angles of 120° between abutting lateral side surfaces 23b and 29b. This permits the recess of the receiving element 29a of the first attachment member 29 to receive the protrusion 23a of the tool shaft 23 in a form fit manner in six discrete rotational positions of 0°, 60°, 120°, 180°, 240° and 300°. However, the protrusion 23a and the recess of the receiving element 29a may have any other not rotation-symmetric form, too.

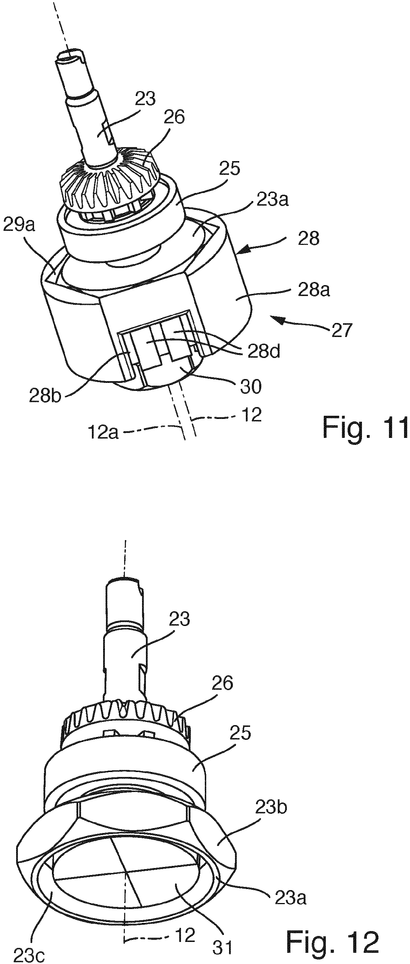

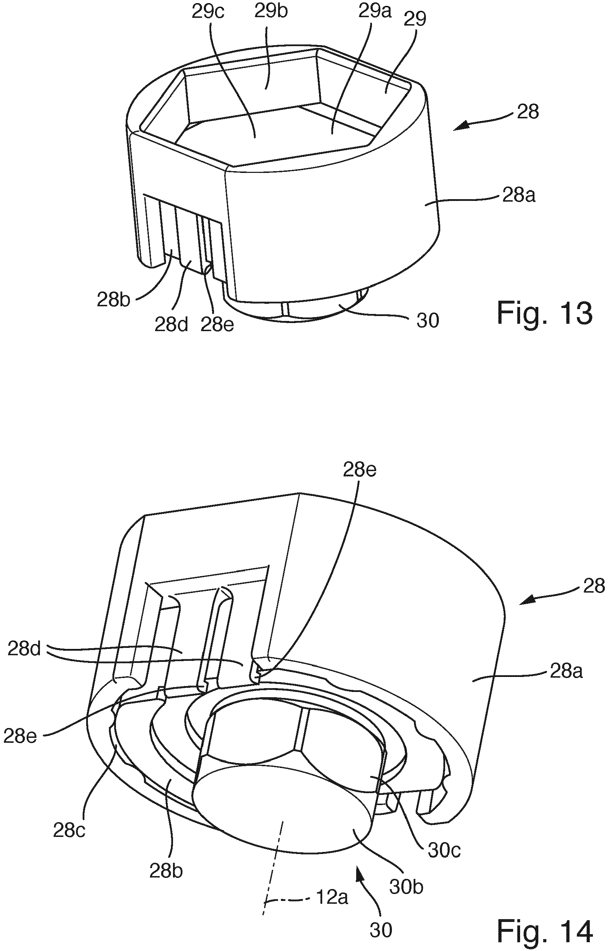

It is possible that one or more permanent magnets 31 are provided in the protrusion 23a (see Fig. 12) and that the recess of the receiving element 29a comprises a ferromagnetic material, in particular in its bottom surface 29c (see Fig. 13). In this way, a magnetic force is provided which acts between the first attachment member 29 and the tool shaft 23 and which holds the functional unit 27 in respect to the tool shaft 23 of the power tool 1. In the embodiment of Fig. 12 the protrusion 23a has a receptacle 23c which receives four separate permanent magnets 31. The permanent magnets 31 each have the form of a circle segment of 90°. Of course, permanent magnets 31 of any other form and number could be used in the present invention. The permanent magnets 31 may be glued inside the receptacle 23c or fixed therein in any other way. Preferably, the protrusion 23a comprises a cover element (not shown) which can be fixedly attached to the protrusion 23a thereby closing the opening of the receptacle 23c and positioning the permanent magnets 31 therein. The cover element may be attached to the protrusion 23a by means of a snap connection, a threaded connection or in any other way. The cover element is preferably made of plastic material, in order to provide for a shock absorbing effect in respect to the permanent magnets 31.

In the embodiment of Fig. 13, the base element 28 is made up of two separate pieces 28a, 28b, which can be securely attached to each other. The first piece 28a is preferably made of plastic material and comprises the receiving element 29a with the recess. The second part 28b is preferably made of a ferromagnetic material, in particular a ferromagnetic metal, for example conventional steel or stainless steel. Opposite to the recess of the receiving element 29a the first piece 28a comprises a receiving section 28c for receiving the second part 28b (see Fig. 14). Furthermore, the first piece 28a comprises lateral clamping elements 28d at least one located on opposite sides of the receiving section 28c. The clamping elements 28d each comprise an elongated arm section and a clamping section 28e at the distal end of the arm section. The clamping elements 28d or the elongated arm sections, respectively, are elastically bent outwards when the second part 28b is inserted into the receiving section 28c of the first part 28a. Upon complete insertion of the second part 28b of the base element 28 into the receiving section 28c, the clamping elements 28d will snap back into their original positions due to their elasticity with the clamping sections engaging behind the second part 28b. With the first and second parts 28a, 28b of the base element 28 fixedly attached to each other, a top surface of the second part 28b forms the bottom surface 29c of the recess of the receiving element 29a. The second part 28b is preferably made of a ferromagnetic material, in particular steel. Hence, the top surface of the second part 28b forms the ferromagnetic bottom surface 29c of the recess of the receiving element 29a.

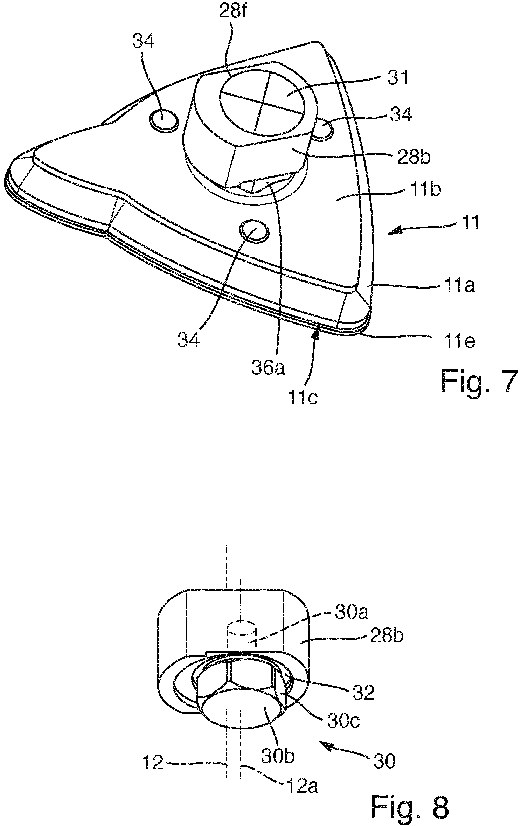

Alternatively, it is suggested that one or more permanent magnets 31 are provided below a bottom surface 29c of the recess of the receiving element 29a (see Figs. 6 and 7) and the protrusion 23a is made of a ferromagnetic material (see Fig. 5). Again, a magnetic force is provided which acts between the first attachment member 29 and the tool shaft 23 and which holds the functional unit 27 in respect to the tool shaft 23.

In the embodiment of Figs. 6 and 7 the base element 28 is made up of two separate pieces 28a, 28b, which can be securely attached to each other. The first piece 28a is preferably made of plastic material and comprises the recess of the receiving element 29a of the first attachment member 29. The recess of the receiving element 29a is closed towards the bottom and has a bottom surface 29c made of a sheet of plastic material. The second part 28b could be made of a ferromagnetic material but in this case could also be made of a non-ferromagnetic material, for example aluminium or a plastic material. The second piece 28b comprises a receptacle 28f for the permanent magnets 31. In the embodiment four permanent magnets 31 are received in the receptacle 28f, each of which having the form of a circle segment of 90°. Of course, permanent magnets 31 of any other form and number could be used in the present invention. The permanent magnets 31 may be glued inside the receptacle 28f or fixed therein in any other way, e.g. by means of a press fit. The permanent magnets 31 are covered and held in the receptacle 28f by the bottom surface 29c of the recess of the receiving element 29a when the first piece 28a is attached to the second piece 28b.

Opposite to the receiving element 29a the first piece 28a comprises a receiving section 28c for receiving the second part 28b (similar to what is shown in Fig. 14). Furthermore, the first piece 28a comprises lateral clamping elements 28d at least one located on opposite sides of the receiving section 28c. The clamping elements 28d each comprise an elongated arm section and a clamping section 28e at the distal end of the arm section. The clamping elements 28d or the elongated arm sections, respectively, are elastically bent outwards when the second part 28b is inserted into the receiving section 28c of the first part 28a. Upon complete insertion of the second part 28b of the base element 28 into the receiving section 28c, the clamping elements 28d will snap back into their original positions due to their elasticity with the clamping sections engaging behind the second part 28b. With the first and second parts 28a, 28b of the base element 28 fixedly attached to each other, the top surface of the second part 28b including the permanent magnets 31 located in the receptacle 28f are covered by the sheet of plastic material forming the bottom surface 29c of the recess of the receiving element 29a. Hence, in contrast to the embodiment of Fig. 13, the bottom surface 29c of the recess of the receiving element 29a is not formed by the second piece 28b but rather by the first piece 28a. The magnetic field created by the permanent magnets 31 can easily pass through the sheet of plastic material forming the bottom surface 29c of the recess of the receiving element 29a and interact with the ferromagnetic material of the protrusion 23a of the tool shaft 23.

The base element 28 of the functional unit 27 may comprise a simple extension piece (see Fig. 2), which simply transmits the rotational movement of the tool shaft 23 directly to the working element 11. The extension piece may have a cylindrical or any other functionally adapted form with the first attachment member 29 on one end and the second attachment member 30 on the opposite second end. The extension piece is particularly useful for operating working elements 11 which perform a purely rotational working movement, like, for example, a sanding plate, a polishing plate or a rotary brush.

Preferably, the base element 28 of the functional unit 27 comprises an eccentric element (see Figs. 3 to 15). The first attachment member 29 and the second attachment member 30 are located on opposite sides of the eccentric element. The rotational axis 12 of the tool shaft 23 of the power tool 1, which is releasably attached to the base element 28 by means of the first attachment member 29, and an axis 12a of the working element 11, which is attached to the base element 28 by means of the second attachment member 30, run essentially parallel and at a distance to each other. The tool shaft 23 is attached to the base element 28 in a torque proof manner, thereby providing for an oribtal movement of the axis 12a of the working element 11 and the working element 11 itself, respectively, about the rotational axis 12 of the tool shaft 23.

It is further suggested that the second attachment member 30 comprises an attachment rod 30a (see Fig. 8) rotatably supported in the base element 28, e.g. by means of a bearing 32. The working element 11 is attached, preferably releasably attached, to the attachment rod 30a in a torque proof manner. According to this embodiment, the working element 11 is freely rotatable about its axis 12a in respect to the base element 28. If the base element 28 comprises an eccentric element, in this embodiment the working element 11 may execute a random-orbital working movement during the intended use of the power tool 1. Such a working movement can be used for sanding or polishing operations. To this end, a functional unit 27 with an eccentric element with an excentre of e.g. 2 or 3 mm and with a working element 11 in the form of a backing pad 11a with a sanding sheet 11e may be attached to the power tool 1 for sanding operations. Similarly, a functional unit 27 with an eccentric element with an excentre of e.g. 12 mm and with a working element 11 in the form of a backing pad 11a with a polishing member 11d, e.g. a polishing pad, may be attached to the power tool 1 for polishing operations. Of course, the values of the excentres may differ from the mentioned values.

Depending on the design of the base element it may be necessary to provide different types of protection hoods 33 at the front end of the power tool, covering at least part of the functional unit 27. Fig. 15 shows a first type of protection hood 33a, which covers and surrounds, respectively, the entire functional unit 27. The protection hood 33b shown in Fig. 16 has a much flatter design than the protection hood 33a. The embodiment of Figs. 16 and 17 will be described in more detail later on. The protection hood 33 is attached to a bottom end of the front casing 2e, e.g. by means of a clip-in or a bayonet connection. The protection hood 33 is preferably made of plastic material.

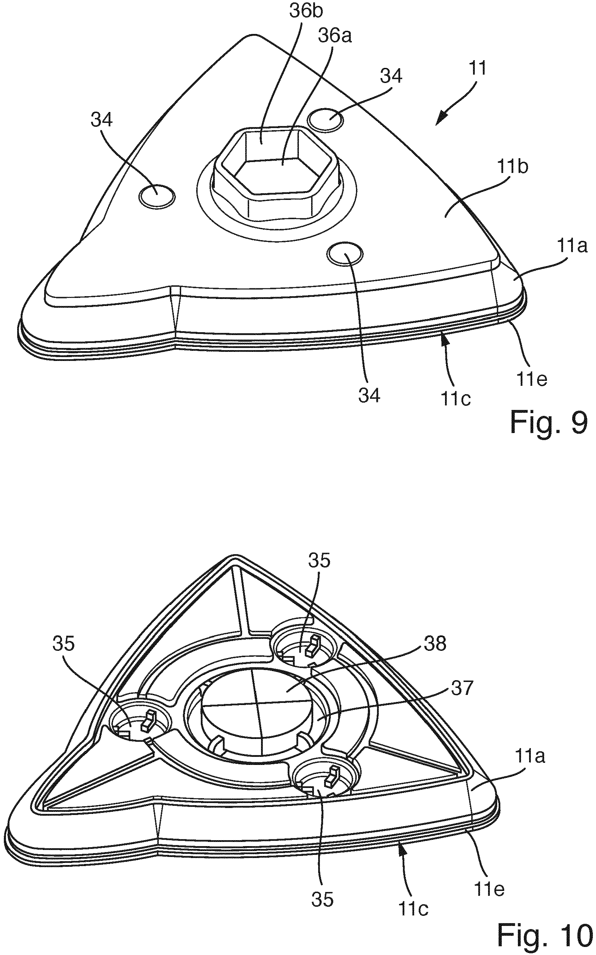

The protection hood 33 may also have a braking functionality slowing down or even entirely preventing the working element 11 from freely rotating about its axis 12a in respect to the base element 28. By means of the braking functionality a random-orbital working movement of the working element 11 may be changed into a purely orbital or eccentric working movement. The braking functionality may be provided mechanically (by means of friction between a static bottom surface of the protection hood 33 on a top surface of the rotatable working element 11) or magnetically (by means of magnetic force acting between the static protection hood 33 and the rotatable working element 11). In order to achieve the braking functionality by means of magnetic force, the protection hood 33 and the top surface of the working element 11 may be provided with corresponding magnets and/or ferromagnetic elements, respectively. In Figs. 3, 4, 6, 7, 9 permanent magnets 34 attached to the working element 11 are shown. They are received and held in respective receptacles 35 provided in the working element 11 (see Fig. 10). The respective permanent magnets of the protection hood 33 are not shown. The braking functionality by means of magnetic force is described in detail in EP 3 501 732 A1, which is incorporated herein in its entirety by reference.

The attachment of the working element 11 to the second attachment member 30 of the functional unit 27 may be effected in many different ways. The working element 11 may be fixedly or releasably attached to the second attachment member 30. For example, the attachment rod 30a could form an integral part of a top surface of the working element 11 and could be inserted into and secured to a bearing 32 of the base element 28 in an axial direction, e.g. by means of one or more retaining rings. Furthermore, the attachment rod 30a could be held and secured in the bearing 32 of the base element 28 and the working element 11 could be releasably attached to the attachment rod 30a. Releasable attachment could be effected, for example, by means of a threaded connection, a snap-in connection or a magnetic connection.

Preferably, the second attachment member 30 or the attachment rod 30a, respectively, comprises a protrusion 30b fixedly attached to or making an integral part of the attachment rod 30a, the protrusion 30b having a not rotation-symmetric outer circumferential surface 30c (see Figs. 8 and 14). The protrusion 30b is adapted to be received by a corresponding recess of a receiving element 36a formed in or on a top surface of the working element 11 (see Fig. 9). The recess of the receiving element 36a has a corresponding not rotation-symmetric inner circumferential surface 36b, so that the protrusion 30b of the attachment rod 30a can be inserted into the recess of the receiving element 36a of the working element 11 in a form fit manner in only one or more discrete rotational positions. In this way, the attachment rod 30a and the working element 11 are attached to each other in a torque proof manner. A torque can be transmitted from the attachment rod 30a to the working element 11 in a plane extending perpendicular to the axis 12a of the working element 11. However, due to the fact that the attachment rod 30a is supported in the base element 28 in a freely rotatable manner, the working element 11 is also freely rotatable about its axis 12a in respect to the base element 28. This leads to a random-orbital working movement of the working element 11.

In the embodiments of Figs. 8, 9 and 14, the protrusion 30b and the recess of the receiving element 36a have a regular hexagonal form with lateral side surfaces 30c and 36b of the same length and the same angles of 120° between abutting lateral side surfaces 30c and 36b. This permits the recess of the receiving element 36a of the working element 11 to receive the protrusion 30b of the second attachment member 30 of the functional unit 27 in a form fit manner in six discrete rotational positions of 0°, 60°, 120°, 180°, 240° and 300°. However, the protrusion 30b and the recess of the receiving element 36a may have any other not rotation-symmetric form, too.

In an axial direction, that is parallel to the axis 12a, the working element 11 can be secured to the second attachment member 30 or the attachment rod 30a, respectively, e.g. by means of a screw (not shown). The screw can be threaded through a hole in a bottom surface 11c of the working element 11 and screwed into the attachment rod 30a located on the top surface of the working element 11. When the screw is tightened to the second attachment member 30, the screw head is countersunk in an appropriate depression on the bottom surface 11c of the working element 11.

Preferably, the protrusion 30b of the second attachment member 30 or the attachment rod 30a, respectively, is held in the recess of the receiving element 36a of the working element 11 in an axial direction by means of magnetic force. To this end, it is suggested that the working element 11 comprises a receptacle 37 below the receiving element 36a for receiving at least one permanent magnet 38 (see Fig. 10). In this embodiment the receptacle 37 receives four separate permanent magnets 38 each having the form of a circle segment of 90°. Of course, permanent magnets 38 of any other form and number could be used for attachment of the working element 11 to the functional unit 27. The permanent magnets 38 may be glued inside the receptacle 37 or fixed therein in any other way. They could also be retained in the receptacle 37 by means of the rigid supporting structure 11b, which may be glued, welded or fixed in any other way to a damping layer of the backing pad 11a of the working element 11 (see Fig. 9).

The magnetic attachment of the working element 11 to the second attachment member 30 allows an easy and fast attachment and detachment of the working element 11 from the functional unit 27. Such a magnetic attachment of the working element 11 to a functional unit 27 or a power tool 1, respectively, is described in detail in EP 3 520 962 A1, which is incorporated herein in its entirety by reference. Different values of the magnetic forces for attachment of the functional unit 27 to the tool shaft 23 and for attachment of the working element 11 to the functional unit 27 can be provided. In this manner, when pulling at the working element 11 in an axial direction the user can be sure that only the working element 11 is separated from the functional unit 27 or the entire functional unit 27 is separated from the tool shaft 23.

It is suggested that the not rotation-symmetric outer circumferential surface 30c of the protrusion 30b of the second attachment member 30 and the not rotation-symmetric outer circumferential surface 23b of the protrusion 23a are identical. Similarly, the not rotation-symmetric inner circumferential surface 29b of the recess of the receiving element 29a of the first attachment member 29 and the not rotation-symmetric inner circumferential surface 36b of the recess of the receiving element 36a of working element 11 are identical. In this manner, it is possible that the working element 11 may be directly attached to the tool shaft 23 without the coupling by means of the base element 28 of the functional unit 27. This may be advantageous in some embodiments, in particular when small dimensions, in particular a small height of the tool head 9 is desired or required. This embodiment is shown in Figs. 16 and 17. In this case, the working element 11 would perform the same rotational movement as the tool shaft 23.

## Claims

1. Functional unit (27) for a hand-guided power tool (1), in particular in the form of a polisher or a sander, the functional unit (27) comprising a base element (28), a first attachment member (29) for releasable attachment of the base element (28) to a motor driven tool shaft (23) of the power tool (1), a working element (11) adapted for working a surface of a workpiece during use of the power tool (1), and a second attachment member (30) for attachment of the working element (11) to the base element (28),
**characterized in that**
the first attachment member (29) is adapted to releasably attach the base element (28) of the functional unit (27) to the tool shaft (23) of the power tool (1) by means of magnetic force.

2. Functional unit (27) according to claim 1, wherein the first attachment member (29) is adapted to attach the base element (28) of the functional unit (27) to the tool shaft (23) of the power tool (1) in a torque proof manner.

3. Functional unit (27) according to claim 2, wherein the first attachment member (29) comprises a receiving element (29a) having a recess with a not rotation-symmetric inner circumferential surface (29b), the receiving element (29a) adapted to receive a corresponding protrusion (23a) fixedly attached or making an integral part of the tool shaft (23) of the power tool (1), the protrusion (23a) having a corresponding not rotation-symmetric outer circumferential surface (23b), so that the receiving element (29a) of the first attachment member (29) can receive the protrusion (23a) of the tool shaft (23) in a form fit manner in only one or more discrete rotational positions, and wherein the protrusion (23a) is held in the recess of the receiving element (29a) in an axial direction by means of magnetic force.

4. Functional unit (27) according to claim 3, wherein one or more permanent magnets (31) are provided below a bottom surface (29c) of the recess of the receiving element (29a) and the protrusion (23a) of the tool shaft (23) is made of a ferromagnetic material.

5. Functional unit (27) according to claim 3, wherein one or more permanent magnets (31) are provided in the protrusion (23a) and the receiving element (29a) comprises a ferromagnetic material (29c).

6. Functional unit (27) according to one of the preceding claims, wherein the base element (28) comprises two pieces (28a, 28b) fixedly attached to each other in a torque proof manner, a first piece (28a), preferably made of a plastic material, comprising the first attachment member (29) and a second piece (28b), preferably made of metal, comprising the second attachment member (30).

7. Functional unit (27) according to claim 6, wherein the first piece (28a) of the base element (28) comprises a receiving element (29a) and the second piece (28b) of the base element (28) comprises a receptacle (28f) for the one or more permanent magnets (31) facing the receiving element (29a) of the first piece (28a) when the two pieces (28a, 28b) are fixedly attached to each other.

8. Functional unit (27) according to claim 6 or 7, wherein the first piece (28a) of the base element (28) is designed to receive at least part of the second piece (28b) of the base element (28) in a form fit manner and wherein the two pieces (28a, 28b) are designed to be attached to each other by means of one or more snap on connections (28d, 28e), when the at least part of the second piece (28b) is received by the first piece (28a).

9. Functional unit (27) according to one of the preceding claims, wherein the base element (28) comprises an eccentric element.

10. Functional unit (27) according to claim 9, wherein the second attachment member (30) comprises an attachment rod (30a) rotatably supported in the base element (28) and wherein the working element (11) is releasably attached to the attachment rod (30a) in a torque proof manner.

11. Functional unit (27) according to claim 10, wherein the attachment rod (30a) comprises a protrusion (30b) fixedly attached or making an integral part of the attachment rod (30a), the protrusion (30b) having a not rotation-symmetric outer circumferential surface (30c) and adapted to be received by a corresponding recess of a receiving element (36a) formed in or on a top surface of the working element (11), the recess of the receiving element (36a) having a corresponding not rotation-symmetric inner circumferential surface (36b), so that the protrusion (30b) of the attachment rod (30a) can be inserted into the recess of the receiving element (36a) of the working element (11) in a form fit manner in only one or more discrete rotational positions.

12. Functional unit (27) according to claim 11, wherein the protrusion (30b) of the attachment rod (30a) is held in the recess of the receiving element (36a) of the working element (11) in an axial direction by means of magnetic force.

13. Functional unit (27) according to claim 11 or 12, wherein the not rotation-symmetric outer circumferential surface (30c) of the protrusion (30b) of the attachment rod (30a) and the not rotation-symmetric inner circumferential surface (29b) of the recess of the receiving element (29a) of the base element (28) correspond to each other so that the protrusion (30b) would theoretically fit into the recess of the receiving element (29a) in one or more discrete rotational positions in a form fit manner.

14. Functional unit (27) according to one of the preceding claims, wherein the working element (11) comprises one of a plurality of backing pads (11a) with different diameters to which a polishing or sanding member (11d, 11e) is releasably attachable.

15. Hand-guided power tool (1), in particular in the form of a polisher or a sander, comprising a housing (2) and a motor (16) located therein, the motor (16) driving a tool shaft (23) of the power tool (1), to which a functional unit (27) is releasably attachable, the functional unit (27) comprising a base element (28), a first attachment member (29) for releasable attachment of the base element (28) to the tool shaft (23), a working element (11) adapted for working a surface of a workpiece during use of the power tool (1), and a second attachment member (30) for attachment of the working element (11) to the base element (28),
**characterized in that**
the power tool (1) comprises a functional unit (27) according to one of the preceding claims.
